# EUROPÄISCHE PATENTSCHRIFT

(11) **EP 1 897 731 B1**
(45) Veröffentlichungstag und Bekanntmachung des Hinweises auf die Patenterteilung: **16.10.2013**
(21) Anmeldenummer: 07015450.5
(22) Anmeldetag: 07.08.2007
(51) Int. Cl.: B60J 7/12

(54) **Faltverdeck mit einem an einen Rahmenlenker angebundenen Verdeckbezug**
Foldable soft top with the soft top material attached along the frame
Capote pliable avec matériau de capote relié au long du cadre

(30) Priorität: 08.09.2006 DE 102006042288
(43) Veröffentlichungstag der Anmeldung: 12.03.2008
(73) Patentinhaber: Dr. Ing. h.c. F. Porsche AG, 70435 Stuttgart (DE)
(72) Erfinder: Fröschle, Mathias, 73760 Ostfildern (DE)

(56) Entgegenhaltungen:
- EP-A2- 0 997 334
- EP-A2- 1 050 421
- WO-A1-2005/084980
- DE-A1- 10 160 461
- DE-A1- 10 349 821
- DE-A1- 19 942 427
- US-A1- 2004 094 988

## Beschreibung

Die vorliegende Erfindung betrifft ein Faltverdeck für ein Fahrzeug nach dem Oberbegriff des Anspruchs 1. Das Dokument DE 19942427 A1 offenbart ein solches Verdeck.

Ein gattungsgemäßes Faltverdeck umfasst neben einem Verdeckbezug, der ein- oder mehrlagig ausgebildet sein kann und bevorzugt wenigstens einen dem Fahrgastraum zugewandten Dachhimmel und eine wetterdichte Außenlage aufweist, einen mehrteiligen Dachrahmen, der in einer Schließstellung des Verdecks wenigstens teilweise an Kanten der geschlossenen Seitenscheiben bzw. Türen des Fahrzeugs und/oder der Oberkante des Windschutzscheibenrahmens anliegt. Falls bei einem als Roadster ausgeführten Fahrzeug keine Seitenscheiben und über die Gürtellinie hinausragenden Türkanten vorhanden sind, bildet der Dachrahmen den seitlichen Abschluss des Verdecks.

Um das Faltverdeck aus einer Ablagestellung, in der es in einem Aufnahmeraum abgelegt ist, in die Schließstellung, in der das Verdeck einen Fahrgastraum überspannt, zu bewegen, ist der Dachrahmen aus mehreren gegeneinander beweglichen Rahmenteilen zusammengesetzt, die in der Schließstellung im wesentlichen den vorderen Rand und die Seitenränder des Verdecks bilden und in der Ablagestellung gegeneinander gefaltet in einem Verdeckkasten oder dem Fond des Fahrzeugs abgelegt sind.

Zur Darstellung dieser Bewegung umfasst ein gattungsgemäßes Faltverdeck weiterhin wenigstens einen Rahmenlenker. Dieser ist direkt oder über weitere Rahmen-, Zwischen- oder Querlenker gelenkig mit einem der Rahmenteile derart verbunden, dass dieses sich bei einer Bewegung des Rahmenlenkers zwangsgeführt mitbewegt. Hierdurch ist es vorteilhaft möglich, die Bewegung mehrerer Rahmenteile miteinander kinematisch zu koppeln, so dass sich bei der Bewegung eines Rahmenteils weitere Rahmenteile auf vorgegebenen Bahnen mitbewegen. In diesem Fall müssen nicht alle Rahmenteile einzeln bewegt werden, was das Ent- und Einfalten des Verdecks vereinfacht. Gleichermaßen ist es möglich, bestimmte Rahmenteile nicht direkt, sondern über den Rahmenlenker zu aktuieren und sie so indirekt, beispielsweise motorisch über einen im Fahrzeug angeordneten Aktuator zu bewegen.

In der Schließstellung soll der Verdeckbezug gegenüber dem Dachrahmen abgedichtet sein. Insbesondere, wenn der Dachrahmen seinerseits gegenüber der Oberkante des Windschutzscheibenrahmens sowie den Oberkanten der Türrahmen bzw. der geschlossenen Fenster abgedichtet ist, wird damit der gesamte Fahrgastinnenraum abgedichtet, so dass die Insassen gegen Regen, Fahrtwind und dergleichen geschützt sind. Auch bei einem klassischen Roadster ohne Seitenfenster soll der Verdeckbezug gegenüber dem Dachrahmen abgedichtet sein, um ein Eindringen von Regen oder Fahrtwind zwischen Verdeckbezug und dem Dachrahmen, der den seitlichen Abschluss des Verdecks bildet, zu verhindern.

Die naheliegendste Lösung hierzu, wie sie beispielsweise beim aktuellen BMW Z4 Cabriolet umgesetzt und in der DE 40 38 694 beschrieben ist, besteht darin, den Verdeckbezug direkt an den Dachrahmen anzubinden. Dies gewährleistet in der Schließstellung eine größtmögliche Dichtigkeit.

Nachteilig schränkt diese Lösung jedoch sowohl die Kinematik des Dachrahmens als auch die Faltung des Verdeckbezuges stark ein. So ist die Faltung des Verdeckbezuges beim Ablegen in die Ablagestellung durch die hierbei erfolgenden Bewegungen der einzelnen Rahmenteile, mit denen der Verdeckbezug verbunden ist, vorgegeben. Insbesondere bestimmt die Endstellung der einzelnen Rahmenteile relativ zueinander und zum Fahrzeug die Topologie, in der der Verdeckbezug in der Ablagestellung gefaltet ist.

Zugleich verhindert eine Anbindung des Verdeckbezugs an zwei benachbarte Rahmenteile, jedenfalls im Rahmen der Dehnungsgrenzen des Verdeckbezuges, eine translatorische Verschiebung diese Teile voneinander weg und gestattet so nur einfache Verdeckkinematiken, bei denen sich benachbarte Dachrahmenteile relativ zueinander nur in gemeinsamen Gelenkpunkten verdrehen. Insbesondere ist keine Verdeckkinematik realisierbar, bei der ein Rahmenteil seine Orientierung beim Ent- bzw. Einfalten im Wesentlichen beibehält, indem es beispielsweise über einen Viergelenkmechanismus bewegt wird.

Zur Darstellung anderer Verdeckkinematiken ist es daher beispielsweise aus der DE 44 41 666 C1 oder der EP 0 731 794 A1 bekannt und beim aktuellen Porsche Boxster 986/987 umgesetzt, den Verdeckbezug an dem die B-Säule bildenden hinteren Dachrahmenteil nicht anzubinden, sondern den seitlichen Rand des Verdeckbezugs erst beim Schließen in eine im Rahmenteil ausgebildete Aufnahme einzulegen. Der Verdeckbezug ist hierzu fest an einem als formsteifer Verdeckabschnitt ausgebildeten vorderen Rahmenteil und an einem Hauptspriegel angebunden. Beim Schließen des Verdecks bewegen sich das vorderer und hintere Dachrahmenteil und der hierzu quer verlaufende Hauptspriegel gegeneinander und spannen hierbei den Verdeckbezug, wodurch dieser randseitig in die Aufnahme im hinteren Dachrahmenteil eingeführt wird. Beim vollständigen Schließen spannt dann ein im Rand des Verdeckbezugs eingearbeitetes Seil den Verdeckbezug und legt diesen am hinteren Rahmenteil fest.

Damit ist der Verdeckbezug nur kraftschlüssig über die Verspannung des Seiles in der Aufnahme mit dem hinteren, als B-Säule ausgebildeten Dachrahmenteil verbunden, was insbesondere bei höheren Windkräften oder anderen Belastungen des Verdeckes zu minimalen Bewegungen des Verdeckbezuges relativ zum hinteren Rahmenteil und damit zu einer Verschlechterung der Dichtwirkung, zu einer Erhöhung der Fahrtgeräusche sowie zu einer Abnutzung des Verdeckbezugrandes führen kann.

Überdies sind auch bei dieser Lösung der Verdeckkinematik sowie der Faltung enge Grenzen gesetzt. So ist die Faltung des Verdeckbezuges beim Ablegen in die Ablagestellung durch die hierbei erfolgenden Relativbewegung des Hauptspriegels gegen das vordere Dachrahmenteil vorgegeben. Insbesondere bestimmt die Ablagestellung des Hauptspriegels maßgeblich Topologie, in der der Verdeckbezug in der Ablagestellung gefaltet ist.

Dementsprechend setzt diese Lösung notwendig einen Hauptspriegel voraus, um den Verdeckbezug im Bereich des hinteren Dachrahmenteils ausreichend zu führen und insbesondere ein Verdrehen oder Einklemmen beispielsweise in Lenker, Verdeckkasten oder Dachrahmenteile beim Falten zu verhindern. Dies beschränkt den Gestaltungsspielraum für das Faltverdeck zusätzlich.

Ausgehend hiervon ist es daher eine Aufgabe der vorliegenden Erfindung, eine vorteilhaftere Faltung des Verdeckbezuges in die bzw. in der Ablagestellung zu ermöglichen.

Diese Aufgabe wird erfindungsgemäß durch den Gegenstand des Anspruchs 1 gelöst. Zu bevorzugende Weiterbildungen sind Gegenstand der Unteransprüche.

Ein erfindungsgemäßes Faltverdeck für ein Fahrzeug, insbesondere einen Personenkraftwagen umfasst einen mehrteiligen Dachrahmen mit einem vorderen, einem Mittleren und einem hinteren Rahmenteil. Wie sich aus den einleitenden Erläuterungen ergibt, werden unter einem Dachrahmen in fachüblicher Weise insbesondere diejenigen Bauteile verstanden, die in der Schließstellung wenigstens teilweise an Kanten der geschlossenen Seitenscheiben bzw. Türen des Fahrzeugs bzw. der Oberkante des Windschutzscheibenrahmens anliegen.

Weiter umfasst ein erfindungsgemäßes Faltverdeck einen Verdeckbezug. Dieser ist an dem vorderen Rahmenteil angebunden, so dass er durch dessen Überführung in seine Schließstellung in Fahrzeugrichtung nach vorne zur Oberkante des Windschutzscheibenrahmens gezogen und vorteilhafterweise gespannt wird. An seiner heckseitigen Kante kann der Verdeckbezug direkt am Fahrzeug befestigt sein, so dass er durch die Bewegung des Dachrahmens in dessen Schließstellung, insbesondere durch das vordere Rahmenteil und gegebenenfalls ausfahrende Haupt- und/oder Zwischenspriegel in seine vorgesehene Form gespannt wird. Gleichermaßen kann die heckseitige Kante des Verdeckbezuges an einem Spannbügel angebunden sein, der sich bei Überführung in die Schließstellung absenkt und so den Verdeckbezug spannt.

Des weiteren umfasst ein erfindungsgemäßes Faltverdeck wenigstens einen Rahmenlenker zur Bewegung des Dachrahmens aus der Ablagestellung, in der das Verdeck in einem Aufnahmeraum abgelegt ist, in die Schließstellung, in der das Verdeck einen Fahrgastraum überspannt. Hierbei kann es sich um einen Hauptlenker handeln, der an einem vorderen oder mittleren Rahmenteil des Dachrahmen sowie einem Verdecklager in der Fahrzeugkarosserie angelenkt ist und dieses Rahmenteil bei einem Schließen des Verdeckes zwangsgesteuert in seine Endlage überführt. Gleichermaßen kann es sich um einen Zwischen- oder Querlenker handeln, der zwischen einem Rahmenteil und einem weiteren Lenker, bevorzugt einem Hauptlenker, angelenkt ist und so die Bewegung des Rahmenteils steuert.

Erfindungsgemäß ist nun der Verdeckbezug seitlich wenigstens teilweise an diesem Rahmenlenker angebunden. Damit wird die Faltung des Verdeckbezugs in die bzw. in der Ablagestellung durch die Bewegung bzw. die Endstellung dieses Rahmenlenkers definiert. Somit kann vorteilhafterweise die Kinematik des Rahmenlenkers so vorgegeben werden, dass sich eine gewünschte Faltung des Verdeckbezuges ergibt, da der Verdeckbezug in seiner Ablagestellung, in seiner Schließstellung sowie während der Bewegung zwischen diesen beiden Stellungen seitlich durch den Rahmenlenker geführt wird. Wenn sich beispielsweise der Rahmenlenker in der Ablagestellung zusammenfaltet, faltet sich auch der Verdeckbezug entsprechend. Liegt der Rahmenlenker in seiner Ablagestellung unterhalb oder oberhalb des zusammengefalteten Dachrahmens, so liegt auch der Verdeckbezug entsprechend tiefer oder höher, was vorteilhafterweise eine bessere Ausnutzung eines Aufnahmeraums für das Verdeck ermöglicht. Daneben kann ein Einklemmen des Verdeckbezuges zwischen Rahmenteilen, anderen Rahmenlenkern und/oder dem Fahrzeug durch eine entsprechende Wahl der Kinematik des Verdecklenkers vermieden werden. So kann beispielsweise der Rahmenlenker so geführt werden, dass der Verdeckbezug während eines Teils oder über die gesamte Bewegung zwischen Schließ- und Ablagestellung nicht oder nur wenig durchhängt.

Zugleich kann die Kinematik des Dachrahmens, insbesondere die Bewegung der einzelnen Rahmenteile gegeneinander, wesentlich freier gestaltet werden. So können im Gegensatz zu dem eingangs erläuterten Stand der Technik, bei dem der Verdeckbezug an allen Rahmenteilen angebunden ist, benachbarte Rahmenteile auch translatorisch gegeneinander bewegt werden. Insbesondere können einzelne Rahmenteile so in ihre Schließ- und/oder Ablagestellung bewegt werden, dass sie ihre Orientierung, i.e. ihre Neigung gegenüber der Fahrzeuglängsachse im Wesentlichen beibehalten. Hierzu können solche Rahmenteile beispielsweise über einen Viergelenkmechanismus angelenkt sein.

Weiterhin gestattet die Anbindung an dem Rahmenlenker die freiere Formgebung einzelner Rahmenteile, da der Verdeckbezug nicht an alle Rahmenteile angebunden und sein seitlicher Rand nicht mehr durch diese definiert ist.

Auch bei einem erfindungsgemäßen Verdeck kann ein Hauptspriegel vorgesehen sein, an dem der Verdeckbezug in einer bevorzugten Weiterbildung zusätzlich befestigt sein kann. Im Gegensatz zum eingangs erläuterten Stand der Technik ist eine solche Anbindung an einen Hauptspriegel jedoch nicht notwendig - vorteilhafterweise kann auch der Hauptspriegel selbst entfallen.

Der Verdeckbezug kann durch seine Anbindung an den Rahmenlenker auf entsprechenden Abschnitten seines Längsrandes sicher fixiert werden. Im Gegensatz zu dem eingangs erläuterten Einführen in eine und Verspannen in einer Aufnahme im hinteren Rahmenteil wird erfindungsgemäß der Verdeckbezug durch Klemmelemente in gleicher Weise wie an einem Rahmenteil auch an dem Rahmenlenker befestigt. Dies kann Mikrobewegungen des Verdeckbezugrandes gegenüber seiner Befestigung reduzieren und so die Dichtigkeit des Verdecks verbessern, die Fahr-, insbesondere die Windgeräusche senken und die Lebensdauer des Verdeckbezuges erhöhen.

In einer bevorzugten Ausführung ist der seitliche Rand des Verdeckbezugs wenigstens abschnittsweise dicht mit dem Rahmenlenker verbunden. In einer besonders bevorzugten Ausführung ist hierzu der Verdeckbezug im Wesentlichen über der ganzen Länge des Rahmenlenkers an diesem angebunden.

Vorteilhafterweise bilden der Dachrahmen den in der Schließstellung wenigstens teilweise sichtbaren Rand des Verdecks, während der bzw. die Rahmenlenker vom Fahrgastraum und/oder der Fahrzeugaußenseite her nicht oder nur teilweise sichtbar sind. Die Rahmenlenker können daher im Gegensatz zum Dachrahmen rein funktional ausgebildet sein, ohne auf ästhetische, aerodynamische oder ähnliche Kriterien Rücksicht zu nehmen.

In der Ausführung umfasst der Dachrahmen neben dem vorderen und hinteren Rahmenteil wenigstens ein mittleres Rahmenteil, welches in der Schließstellung zwischen dem vorderen und hinteren Rahmenteil angeordnet ist. Durch die vielfältigeren kinematischen Möglichkeiten, die sich durch die Anbindung des Verdeckbezuges an einen Rahmenlenker ergeben, sind insbesondere solche drei- oder mehrgliedrigen Verdecke vorteilhaft realisierbar und stellen damit einen besonders vorteilhaften Anwendungsfall der vorliegenden Erfindung dar.

Beispielsweise können das vordere und/oder das mittlere Rahmenteil im Wesentlichen unter Beibehaltung ihrer Orientierung zur Fahrzeuglängsachse aus der Ablage- in die Schließstellung überführt werden, während ein hinteres Rahmenteil hierbei um ein Verdecklager in der Fahrzeugkarosserie schwenkt. Hierzu können das vordere und das mittlere Rahmenteil vorteilhafterweise über einen Viergelenkmechanismus verbunden sein, der durch das hintere Rahmenteil oder einen Hauptlenker aktuiert werden kann. Der Hauptlenker kann gleichermaßen auch am mittleren oder hinteren Rahmenteil angelenkt sein und dessen Bewegung gegenüber dem Fahrzeug steuern. Bei dieser Ausführung der vorliegenden Erfindung ist der Verdeckbezug seitlich an dem Hauptlenker angebunden.

Bevorzugt bilden die Rahmenteile in der Schließstellung einen durchgehenden Verdeckrand, der sich insbesondere aus zwei B- oder C-Säulen, einer vorderen, lösbar mit der Oberkante des Windschutzscheibenrahmen verbindbaren Verdeckkante sowie bevorzugt zusätzlich aus zwei seitlichen Verdeckrändern zusammensetzen kann. Ein hinteres Rahmenteil bildet dabei eine B- bzw. C-Säule.

In einer bevorzugten Ausführung können einander gegenüberliegende Rahmenteile miteinander durch Spriegel verbunden sein. Gleichermaßen können solch gegenüberliegenden Rahmenteile auch flächig miteinander verbunden sein und so formsteife Verdeckabschnitte bilden. Beide Ausführungsformen können auch miteinander kombiniert sein, so dass beispielsweise zwei vordere seitliche Rahmenteile zusammen mit einer mit diesen einstückig ausgebildeten Dachplatte einen formsteifen vorderen Verdeckabschnitt bilden, während Querspriegel mittlere und/oder hintere seitliche Rahmenteile jeweils miteinander verbinden.

Vorteilhafterweise liegt der Rahmenlenker in der Schließstellung an dem hinteren Rahmenteil wenigstens teilweise an und wird bevorzugt wenigstens teilweise in einer entsprechenden Aussparung des Rahmenteils aufgenommen. Hiermit kann eine kompakte Verdeckform dargestellt werden. Zudem ist es möglich, den Rahmenlenker zwischen Verdeckbezug und Dachrahmen mehr oder weniger zu verbergen.

Insbesondere zu diesem Zweck kann der Rahmenlenker in der Schließstellung das hintere Rahmenteil von der Außenseite her ganz oder teilweise überdecken. Sofern er das Rahmenteil vollständig überdeckt, ergibt sich in der Seitenansicht ein harmonischer geschlossener Übergang zwischen einer Seitenscheibe bzw. einem Türrand und dem Verdeck, der aus aerodynamischen Gründen vorteilhaft ist. Zudem wirkt hier eine Dichtung direkt zwischen Verdeckbezug und einer Scheibendichtung, so dass nach außen nur eine Dichtung freiliegt. Dies erhöht die Dichtigkeit des geschlossenen Fahrzeugs vorteilhaft.

Der Verdeckbezug kann seinerseits den Rahmenlenker von der Außenseite her ganz oder teilweise überdecken und an diesem auf jede Weise befestigt sein, wie sie bereits zur Anbindung an Rahmenteile bekannt ist.

In der Erfindung ist an einem Rahmenteil oder dem Rahmenlenker eine erste, gegen den anderen von diesem Rahmenteil und dem Rahmenlenker gerichtete Dichtung so angeordnet, dass sie in der Schließstellung dieses Rahmenteil gegen den Rahmenlenker abdichtet und hierzu vorteilhafterweise den anderen von diesem Rahmenteil und dem Rahmenlenker berührt. In der Schließstellung ist dann das Verdeck insgesamt dicht, da der Verdeckbezug dicht am Rahmenlenker angebunden ist und dieser wiederum gegenüber dem Rahmenteil abgedichtet ist.

In einer vorteilhaften Weiterbildung dieser Ausführung ist eine zweite Dichtung so an dem Rahmenteil oder dem Rahmenlenker angeordnet ist, dass sie in der Schließstellung mit einer Scheibendichtung einer Seitenscheibe des Fahrzeugs dichtend zusammenwirkt. Die Scheibendichtung kann ihrerseits vorteilhaft an dem Rahmenteil angeordnet sein und dichtet dieses gegen die Seitenscheibe des Fahrzeugs ab. Bei geschlossenem Verdeck verhindert dann die Scheibendichtung ein Eindringen von Wasser zwischen Seitenscheibe und Dachrahmen, die erste Dichtung ein Eindringen von Wasser zwischen Dachrahmen und Rahmenlenker und die zweite Dichtung ein Eindringen von Wasser zwischen Verdeckbezug und Dachrahmen. Auch bei wenigstens teilweise geöffneter Seitenscheibe und damit bei entspannter Scheibendichtung dichtet die erste Dichtung noch zuverlässig gegen ein Eindringen von Wasser zwischen Dachrahmen und Rahmenlenker.

Die erste Dichtung weist, auch ohne die zweite Dichtung, den weiteren Vorteil auf, das Anlegen des Rahmenlenkers an das Rahmenteil zu dämpfen und bei angelegtem Rahmenlenker kleinere Relativbewegungen zu kompensieren, die sich aufgrund der Fahrzeugdynamik ergeben.

Sofern der Rahmenlenker das hintere Rahmenteil nicht vollständig übergreift, also ein Bereich des Rahmenteils auch in der Schließstellung von außen sichtbar bleibt, kann die zweite Dichtung statt zwischen Verdeckbezug und Scheibendichtung auch zwischen Verdeckbezug und Dachrahmen wirken. Vorteilhaft erhöht dies die Dichtwirkung, da nun einerseits ein Eindringen von Wasser oder Fahrtwind zwischen Verdeckbezug und Dachrahmen, andererseits zwischen dem dicht mit dem Verdeckbezug verbundenen Rahmenlenker und dem Dachrahmen verhindert wird.

Vorteilhafterweise wird der als Hauptlenker ausgebildete Rahmenlenker motorisch aktuiert. Hierzu kann er beispielsweise über Hydraulikzylinder, Elektromotoren, Bowdenzüge oder dergleichen in seinen Gelenkpunkten bewegt werden, mit denen er am Fahrzeug bzw. dem Rahmenteil angelenkt ist. Besonders bei einem derart (teil)automatisierten Öffnen und Schließen des Verdecks, bei der die Faltung des Verdeckbezugs nicht manuell korrigiert wird, ist die vorliegende Erfindung vorteilhaft anwendbar. Dies gilt in besonderem Maße, sofern es sich um ein drei- oder mehrgliedriges Verdeck handelt, i.e. ein Verdeck, das neben einem vorderen und hinteren wenigstens ein mittleres Rahmenteil aufweist. Bei solchen Verdecken wird die Bewegung der verschiedenen Rahmenteile bevorzugt durch mehrere Rahmenlenker gesteuert, so dass die Gefahr des Einklemmens des Verdeckbezugs besonders groß ist.

Weitere Aufgaben, Merkmale und Vorteile ergeben sich aus den Unteransprüchen und den nachfolgenden Ausführungsbeispielen. Hierzu zeigt:
- Fig. 1: eine Prinzipskizze eines Verdecks nach einer Ausführung der vorliegenden Erfindung während des Schließens in einem Halbschnitt vom Fahrzeuginneren aus;
- Fig. 2: das Verdeck nach Fig. 1 in einer seitlichen Außenansicht in der Schließstellung;
- Fig. 3: einen Schnitt längs der Linie III-III in Fig. 2;
- Fig. 4: einen Fig. 3 entsprechenden Schnitt eines nicht zur Erfindung gehörendem Faltverdecks; und
- Fig. 5: einen Fig. 3 und 4 entsprechenden Schnitt einer weiteren Ausführung des nicht zur Erfindung gehörendem Faltverdecks.

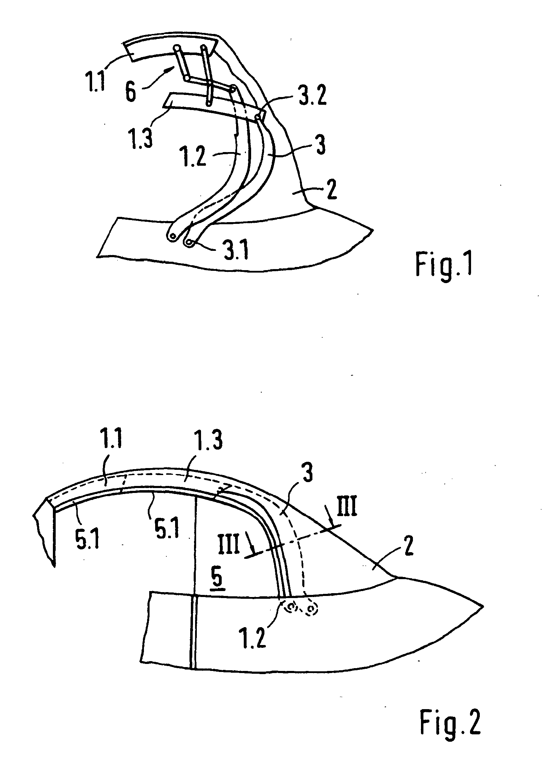

In Fig. 1 ist schematisch ein dreigliedriges Verdeck nach einer Ausführung der vorliegenden Erfindung beim Schließen gezeigt. Es umfasst ein vorderes Rahmenteil 1.1, das über einen Viergelenkmechanismus 6 mit einem mittleren Rahmenteil 1.3 verbunden ist. Ein hinteres Rahmenteil 1.2, welches die B-Säule des Fahrzeugs bildet, durchgreift einen Längsschlitz im mittleren Rahmenteil 1.3 und wird hierdurch zwangsgesteuert. Das hintere Rahmenteil 1.2 ist an seinem einen Ende an einem nicht näher dargestellten Verdecklager des Fahrzeugs, an seinem anderen Ende an einem Querlenker des Viergelenkmechanismus 6 drehbar angelenkt. Die drei Rahmenteile 1.1-1.3 bilden zusammen den in Fig. 2 sichtbaren Dachrahmen 1.

Ein Hauptlenker 3 ist an seinem einen Ende 3.1 drehbar an dem Verdecklager des Fahrzeugs, an seinem anderen Ende 3.2 am mittleren Rahmenteil 1.3 drehbar angelenkt und wird durch einen nicht dargestellten Hydraulikzylinder im Verdecklager um eine zur Fahrzeugquerachse parallel Achse gedreht.

Hierbei dreht sich der Hauptlenker 3 aus einer (nicht dargestellten) Ablagestellung, in der er in einer Verdeckaufnahme des Fahrzeugs abgelegt ist, über die in Fig. 1 gezeigte Stellung in die Schließstellung nach Fig. 2 und führt hierbei das mittlere Rahmenteil 1.3, wobei dessen Orientierung zur Fahrzeuglängsachse, i.e. seine horizontale Lage im Wesentlichen beibehalten wird. Dieses erzwingt seinerseits eine entsprechende Drehung des in dem Schlitz geführten hinteren Rahmenteils 1.2, welches seinerseits den Viergelenkmechanismus 6 derart bewegt, dass sich das vordere Rahmenteil 1.1 im Wesentlichen unter Beibehaltung seiner Orientierung zur Fahrzeuglängsachse aus der Ablagestellung in die in Fig. 2 dargestellte Schließstellung bewegt.

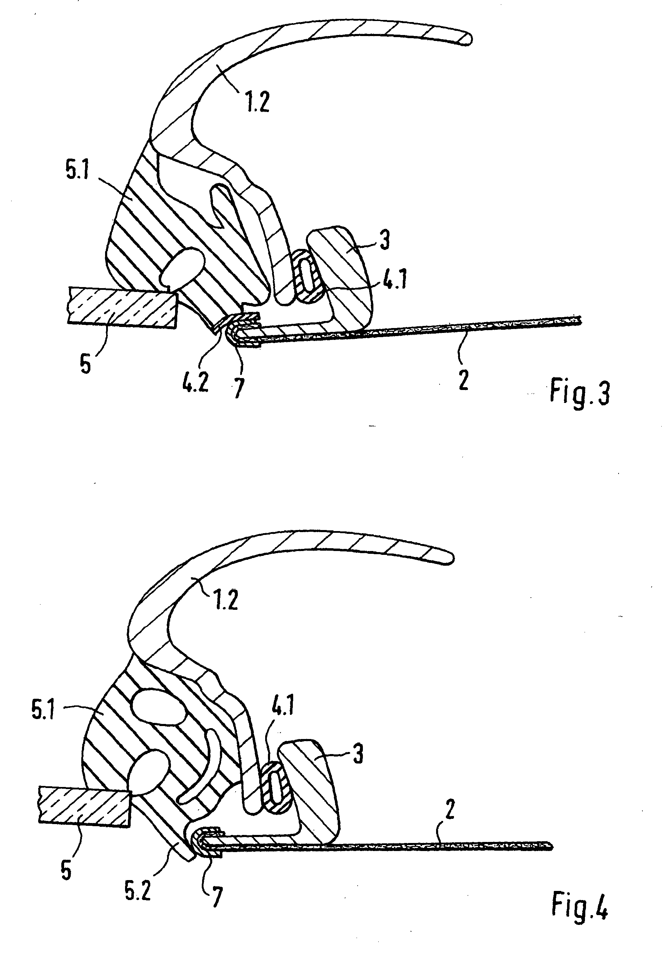

Wie in Fig. 2 angedeutet, greift der Hauptlenker 3 in der Schließstellung teilweise in eine entsprechende Aussparung im hinteren Rahmenteil 1.2 ein, liegt an diesem an und übergreift es von der Fahrzeugaußenseite, wie insbesondere aus den Fig. 3, 4 ersichtlich, teilweise.

Der Verdeckbezug ist einerseits an dem flächig ausgebildeten vorderen Rahmenteil 1.1 angebunden und wird durch dessen Überführung in die Schließstellung gespannt. Hierzu ist es heckseitig in nicht näher gezeigter Weise im Verdeckaufnahmeraum des Fahrzeugs angebunden.

Wie in den Fig. 3, 4 gezeigt, ist der Verdeckbezug randseitig auch an dem Hauptlenker 3 angebunden. Hierzu umgreift ein Klemmelement 7 den Verdeck- und den Lenkerrand und verbindet beide reibschlüssig miteinander. Dabei überdeckt der Verdeckbezug 2 den Hauptlenker 3 von der Außenseite her gesehen (in Fig. 3, 4 von unten) vollständig.

Damit wird der Verdeckbezug durch die Bewegung des vorderen Rahmenteils 1.1 und des Hauptlenkers 3 gegeneinander und gegen das Fahrzeug ent- bzw. eingefaltet. Wie insbesondere in Fig. 1 ersichtlich, können dabei die Rahmenteile 1.2, 1.3 freiere Bewegungen durchführen, ohne hierin durch den Verdeckbezug behindert zu werden. Insbesondere muss das hintere Rahmenteil nicht tief in den Verdeckaufnahmeraum versenkt werden, um den Verdeckbezug entsprechend tief abzulegen. Auf der anderen Seite stellt die Anbindung an den Hauptlenker und dessen Eingreifen von hinten in den hinteren Rahmenteil sicher, dass der Verdeckbezug beim Falten nicht zwischen Rahmenteile eingeklemmt wird oder sich verdreht.

Der Verdeckbezug kann von der Außenseite her auf das mittlere Rahmenteil 1.3 gepresst werden, wobei durch die beidseitige Anbindung am vorderen Rahmenteil 1.1 auf der einen und am Hauptlenker 3 auf der anderen Seite eine ausreichende Fixierung erzielt wird. Gleichermaßen kann der Verdeckbezugrand beim Schließen in an sich bekannter Weise in eine entsprechende Aufnahme im mittleren Rahmenteil eingeführt und dort, beispielsweise mittels eines in den Rand eingearbeiteten Seils, verspannt werden. Da der Verdeckbezug jedoch beidseitig an vorderem Rahmenteil bzw. Hauptlenker angebunden ist, ergibt sich trotzdem eine sichere Fixierung auch am mittleren Rahmenteil 1.3.

Wie in Fig. 2 angedeutet und in den Fig. 3, 4 deutlicher zu erkennen, übergreift eine geschlossene Seitenscheibe 5 teilweise eine Scheibendichtung 5.1, die am hinteren Dachrahmen 1.2 in nicht näher dargestellter Weise angeordnet ist. Die Scheibendichtung kann beispielsweise in eine entsprechende Aussparung im Rahmenteil eingeführt und/oder mit diesem verklebt sein.

In der in Fig. 3 dargestellten Ausführung ist eine erste Dichtung 4.1 in nicht näher dargestellter Weise an dem Hauptlenker 3 befestigt. Sie kann beispielsweise mit einem Vorsprung in eine entsprechende Aussparung eingreifen und/oder am Hauptlenker angeklebt sein.

In der Schließstellung kontaktiert diese erste Dichtung 4.1 das hintere Rahmenteil 1.2. Damit wird einerseits vorteilhaft ein Eindringen von Wasser oder Fahrtwind zwischen Dachrahmen und Hauptlenker verhindert. Andererseits dämpft die erste Dichtung auch das Auftreffen des Hauptlenkers auf das hintere Rahmenteil und reduziert so das Schließgeräusch. In der Schließstellung kompensiert sie darüber hinaus kleine Relativbewegungen zwischen Dachrahmen 1 und Hauptlenker 3, reduziert so die Verdeckgeräusche und erhöht die Lebensdauer der Bauteile.

Weiterhin ist in der Ausführung nach Fig. 3 eine zweite Dichtung 4.2 an der dem Fahrzeuginneren zugewandten Seite des Hauptlenkers 3 derart angeordnet, dass sie in der Schließstellung mit der Scheibendichtung 5.1 zusammenwirkt und so ein Eindringen von Wasser oder Fahrtwind zwischen Verdeckbezug und Dachrahmen verhindert. Durch die Hintereinanderschaltung von erster und zweiter Dichtung wird einerseits die Dichtwirkung verstärkt. Andererseits können die beiden Dichtungen jeweils kleiner und insoweit unauffälliger ausgebildet werden.

In dem Faltverdeck nach Fig. 4 ist an Stelle der zweiten Dichtung 4.2 die Scheibendichtung 5.1 mit einer Dichtlippe 5.2 ausgebildet, die in der Schließstellung den am Hauptlenker 3 angebundenen Verdeckbezug 2 kontaktiert und so Verdeckbezug und Fensterscheibe gegeneinander abdichtet. Im Vergleich zur Ausführung nach Fig. 3 fällt damit eine zusätzliche zweite Dichtung weg, was die Teileanzahl und damit den Montageaufwand vorteilhaft reduziert.

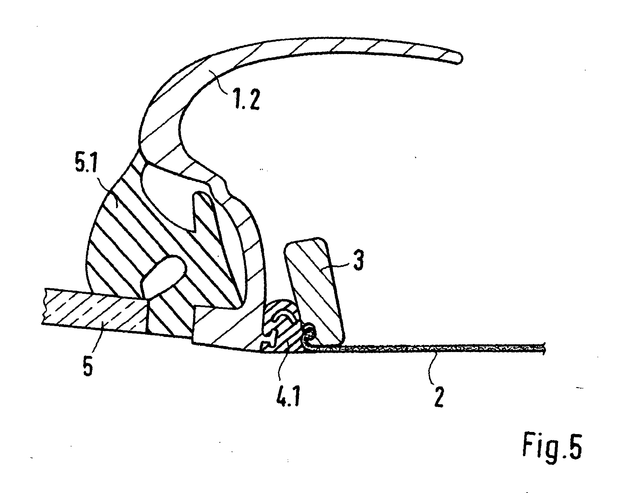

Fig. 5 zeigt ein weiteres Faltverdecks, bei dem der Hauptlenker 3 das hintere Rahmenteil 1.2 nur teilweise übergreift, so dass ein Bereich des hinteren Rahmenteils auch bei geschlossenem Verdeck von außen sichtbar bleibt. Wie bei den vorhergehenden Ausführungen ist eine Scheibendichtung 5.1 auf einer Seite des Rahmenteils 1.2 angeordnet und wirkt mit der geschlossenen Seitenscheibe 5 dichtend zusammen. Auf der gegenüberliegenden Seite des Rahmenteils 1.2 ist eine erste Dichtung 4.1 auf einem Vorsprung des Rahmenteils befestigt. Der Hauptlenker 3, an dem der Vereckbezug 2 in der hier dargestellten Ausführung mittels eines in eine hinterschnittene Nut eingelegten Keders angebunden ist, wirkt in der Schließstellung mit dieser ersten Dichtung zusammen.

Vorteilhafterweise wirkt damit jede Dichtung 4.1, 5.1 zwischen zwei starren Körpern, was eine Reihenschaltung der Steifigkeiten von Dichtungen und damit eine geringere Kompression und Dichtwirkung vorteilhaft vermeidet.

## Patentansprüche

1. Faltverdeck für ein Fahrzeug, insbesondere für ein Personenwagen mit einem Dachrahmen (1), der wenigstens ein vorderes Rahmenteil (1.1), ein mittleres Rahmenteil (1.3) und ein hinteres Rahmenteil (1.2) umfasst, ein Verdeckbezug (2) und einem kinematisch mit dem Dachrahmen gekoppelten Rahmenlenker (3) zur Bewegung des Dachrahmens (1) aus einer Ablagestellung, in der das Verdeck in einem Aufnahmeraum abgelegt ist, in eine Schließstellung, in der das Verdeck einen Fahrgastraum überspannt, **dadurch gekennzeichnet, dass** der Verdeckbezug (2) seitlich wenigstens an dem Rahmenlenker (3) über ein Klemmelement (7) angebunden ist, das eine Dichtung (4.2) aufweist, die in der Schließstellung mit einer Scheibendichtung (5.1) einer Seitenscheibe des Fahrzeugs dichtend zusammen wirkt und eine weitere Dichtung (4.1) an dem Rahmenlenker (3) derart angeordnet ist, dass sie in der Schließstellung dieses Rahmenteil (1.2) gegen den Rahmenlenker (3) abdichtet.

2. Faltverdeck nach Anspruch 1, **dadurch gekennzeichnet, dass** der Rahmenlenker (3) an seinem einen Ende (3.1) drehbar an einem Verdecklager und an seinem anderen Ende (3.2) drehbar am Rahmenlenker (1.3) angelenkt ist.

3. Faltverdeck nach den Ansprüchen 1 oder 2, **dadurch gekennzeichnet, dass** der Rahmenlenker (3) in der Schließstellung an dem hinteren Rahmenteil (1.2) wenigstens teilweise anliegt und das hintere Rahmenteil von der Außenseite her ganz oder teilweise abgedeckt ist.

4. Faltverdeck nach einem der vorhergehenden Ansprüche, **dadurch gekennzeichnet, dass** das Rahmenteil (1.1) über einen Viergelenkmechanismus (6) mit den anderen Rahmenteilen (1.2 und 1.3) verbunden ist.

5. Faltverdeck nach den Ansprüchen 1, 2, 3 oder 4, **dadurch gekennzeichnet, dass** eine Scheibendichtung (5.1) einer Seitenscheibe (5) des Fahrzeugs mit einer Dichtung (5.2) ausgebildet ist, in der Schließstellung mit dem an den Rahmenlenker (3) angebundenen Verdeckbezug (2) dichtend zusammenwirkt.

## Claims

1. Folding top for a vehicle, in particular for a passenger vehicle, having a roof frame (1) which comprises at least one front frame part (1.1), one central frame part (1.3) and one rear frame part (1.2), having a top lining (2) and having a frame link (3), which is kinematically coupled to the roof frame, for moving the roof frame (1) from a stowed position, in which the top is stowed in a stowage compartment, into a closed position, in which the top extends over a passenger compartment, **characterized in that** the top lining (2) is connected laterally at least to the frame link (3) by means of a clamping element (7) which has a seal (4.2) which, in the closed position, interacts sealingly with a window seal (5.1) of a side window of the vehicle, and a further seal (4.1) is arranged on the frame link (3) such that, in the closed position, said further seal seals off said frame part (1.2) against the frame link (3).

2. Folding top according to Claim 1, **characterized in that** the frame link (3) is rotatably articulatedly connected at one end (3.1) thereof to a top bearing and is rotatably articulatedly connected at the other end (3.2) thereof to the frame link (1.3).

3. Folding top according to Claim 1 or 2, **characterized in that**, in the closed position, the frame link (3) bears at least partially against the rear frame part (1.2), and the rear frame part is entirely or partially covered from the outside.

4. Folding top according to one of the preceding claims, **characterized in that** the frame part (1.1) is connected to the other frame parts (1.2 and 1.3) via a four-bar mechanism (6).

5. Folding top according to Claims 1, 2, 3 or 4, **characterized in that** a window seal (5.1) of a side window (5) of the vehicle is formed with a seal (5.2) which, in the closed position, interacts sealingly with the top lining (2) connected to the frame link (3).

## Revendications

1. Capote pliante pour un véhicule, en particulier pour une voiture particulière, comprenant un cadre de toit (1) qui comporte au moins une partie de cadre avant (1.1), une partie de cadre médiane (1.3) et une partie de cadre arrière (1.2), comprenant un revêtement de capote (2) et comprenant un bras de cadre (3) accouplé de manière cinématique au cadre de toit pour le déplacement du cadre de toit (1) à partir d'une position de rangement, dans laquelle la capote est rangée dans un espace de réception, jusqu'à une position de fermeture, dans laquelle la capote recouvre un habitacle des passagers, **caractérisée en ce que** le revêtement de capote (2) est relié latéralement au moins au bras de cadre (3) par le biais d'un élément de serrage (7) qui comprend un joint d'étanchéité (4.2) qui, dans la position de fermeture, coopère de manière étanche avec un joint d'étanchéité de vitre (5.1) d'une vitre latérale du véhicule, et un joint d'étanchéité supplémentaire (4.1) est disposé sur le bras de cadre (3) de telle sorte que, dans la position de fermeture, le joint d'étanchéité supplémentaire réalise l'étanchéité de cette partie de cadre (1.2) par rapport au bras de cadre (3).

2. Capote pliante selon la revendication 1, **caractérisée en ce que** le bras de cadre (3) est, à l'une de ses extrémités (3.1), articulé de manière rotative sur un palier de capote et, à son autre extrémité (3.2), articulé de manière rotative sur le bras de cadre (1.3).

3. Capote pliante selon la revendication 1 ou 2, **caractérisée en ce que** le bras de cadre (3) s'applique, dans la position de fermeture, au moins partiellement contre la partie de cadre arrière (1.2), et la partie de cadre arrière est entièrement ou partiellement recouverte depuis le côté extérieur.

4. Capote pliante selon l'une quelconque des revendications précédentes, **caractérisée en ce que** la partie de cadre (1.1) est raccordée aux autres parties de cadre (1.2 et 1.3) par le biais d'un mécanisme de quadrilatère articulé (6).

5. Capote pliante selon la revendication 1, 2, 3 ou 4, **caractérisée en ce qu'**un joint d'étanchéité de vitre (5.1) d'une vitre latérale (5) du véhicule est réalisé avec un joint d'étanchéité (5.2) qui, dans la position de fermeture, coopère de manière étanche avec le revêtement de capote (2) relié au bras de cadre (3).
